# EUROPÄISCHE PATENTANMELDUNG

(11) **EP 4 064 238 A1**
(43) Veröffentlichungstag der Anmeldung: **28.09.2022**
(21) Anmeldenummer: 22163009.8
(22) Anmeldetag: 18.03.2022
(51) Int. Cl.: G08G 1/00, G08G 1/0967, B60W 40/06

(54) **VERFAHREN UND WARNEINRICHTUNG ZUR WARNUNG EINES NUTZERS EINES FAHRZEUGS VOR EINER GEFAHRENSITUATION**

(30) Priorität: 26.03.2021 DE 102021203056
(71) Anmelder: Volkswagen Aktiengesellschaft, 38440 Wolfsburg (DE)
(72) Erfinder: Münning, Daniel, 38124 Braunschweig (DE); Klawitter, Matthias, 38124 Braunschweig (DE)

(57) **Zusammenfassung**

Verfahren zur Warnung eines Nutzers eines Fahrzeugs (1) vor einer potentiellen Gefahrensituation an wenigstens einem Fahrziel des Fahrzeugs (1), umfassend:
- Abrufen vorangegangener Umfelddaten auf Grundlage des Fahrziels und eines vorgegebenen Zeitraums von einer Speichereinrichtung (12, 14), auf welcher die vorangegangenen Umfelddaten mit ihnen zugeordneten Umfeldortsdaten abgelegt sind, wobei es sich bei den vorangegangenen Umfelddaten um zu einem vorangegangenen Zeitpunkt mittels wenigstens einer Sensoreinrichtung (20) zur Erfassung eines Fahrzeugumfelds ermittelter Daten handelt und wobei die Umfeldortsdaten für einen Ort des erfassten Fahrzeugumfelds charakteristisch sind;
- Ermittlung einer Warngröße auf Grundlage der Umfelddaten, in Abhängigkeit welcher ein Warnsignal zur Ausgabe an den Nutzer mittels einer Ausgabeeinrichtung (6) bereitstellbar ist.

## Beschreibung

Die vorliegende Erfindung bezieht sich auf ein Verfahren sowie eine Warneinrichtung zur Warnung eines Nutzers eines Fahrzeugs vor einer, insbesondere potentiellen und/oder erwarteten, Gefahrensituation an wenigstens einem Fahrziel des Fahrzeugs. Insbesondere betrifft die vorliegende Erfindung ein Verfahren zur Fahrerwarnung mit Hilfe optischer Verfahren bei gefährlichen Situationen.

Bei einer Fahrt, z.B. beim Heimweg von der Arbeit nähert man sich dem Ziel-Ort, z.B. seinem Haus, an. Dort wird das Fahrzeug über Nacht abgestellt und die Wahrscheinlichkeit ist sehr hoch, dass der Weg (nur in umgekehrter Richtung) am nächsten Morgen wieder befahren wird.

Viele moderne Kraftfahrzeuge verfügen über Sensoren, wie z.B. eine Frontkamera, die die Umgebung beobachten kann.

Ein häufiges Problem in den Herbst-/Wintermonaten sind z.B. glatte Straßen, die zur Zeit dem Fahrer nur mit Hilfe einer Außentemperaturmessung generell als Warnung bereitgestellt werden. So wird beispielsweise keine explizite Warnung vor Pfützen, die über Nacht gefroren sind, ausgegeben.

Aus der US 2016/0091323 A1 ist eine Navigationsanwendung bekannt, welche ein dynamisches Set an Warnungen basierend auf einem Set gesammelter und berechneter Daten bereitstellt. Die Navigationsanwendung sammelt Daten, identifiziert hieraus kritische Punkte entlang der Route, wie etwa enge Kurven, steile Anstiege der Fahrstraße oder Baustellen, und wertet die Daten aus, um zu bestimmen, ob eine Navigationswarnung an den Nutzer ausgegeben werden soll. Ist ein kritischer Punkt identifiziert, kann eine beispielsweise an die aktuelle Wetterlage angepasste Navigationswarnung ausgegeben werden, indem etwa ein witterungsabhängiger Bremsweg oder eine witterungsabhängige Fahrgeschwindigkeit ermittelt und bei der Ausgabe der Navigationswarnung berücksichtigt wird.

Der vorliegenden Erfindung liegt die Aufgabe zugrunde, die aus dem Stand der Technik bekannten Nachteile zu überwinden und ein Verfahren sowie eine Warneinrichtung bereitzustellen, mittels welchen möglichst gut an die aktuelle Fahrsituation angepasste Warnmeldungen generiert werden können, mit welchen ein Fahrer gewarnt werden kann.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zur Warnung eines Nutzers (insbesondere eines Fahrers) eines Fahrzeugs vor einer, insbesondere erwarteten und/oder potentiellen, Gefahrensituation an wenigstens einem Fahrziel des Fahrzeugs, werden vorangegangene Umfelddaten auf Grundlage des Fahrziels und bevorzugt auf Grundlage eines vorgegebenen Zeitraums von einer Speichereinrichtung (bevorzugt durch eine Warneinrichtung des Fahrzeugs und/oder durch eine Warneinrichtung eines externen Servers) abgerufen. Auf der Speichereinrichtung sind die vorangegangenen Umfelddaten mit ihnen zugeordneten Umfeldortsdaten abgelegt. Dabei handelt es sich bei den vorangegangenen Umfelddaten um zu einem vorangegangenen Zeitpunkt mittels wenigstens einer Sensoreinrichtung zur Erfassung eines Fahrzeugumfelds ermittelte Daten. Dabei sind die Umfeldortsdaten für einen Ort des erfassten Fahrzeugumfelds charakteristisch.

Das vorgeschlagene Verfahren, bietet den Vorteil, dass mit Hilfe der Beobachtung der Umwelt (durch Ermittlung der Umfelddaten) "Wissen" im Umkreis um den Zielort generiert werden kann, auf das etwa am nächsten Tag (bzw. zu einem späteren Zeitpunkt) wieder zurückgegriffen werden kann.

Bevorzugt ist auch der vorangegangene Zeitpunkt, an welchem die Umfelddaten ermittelt und/oder erzeugt wurden, auf der Speichereinrichtung abgelegt. Insbesondere handelt es sich um ein Verfahren zur Fahrerwarnung mit Hilfe optischer Verfahren bei gefährlichen Situationen.

Weiter umfasst das Verfahren eine Ermittlung einer Warngröße auf Grundlage der Umfelddaten, in Abhängigkeit welcher ein Warnsignal zur Ausgabe an den Nutzer mittels einer Ausgabeeinrichtung bereitstellbar ist.

Bevorzugt ist die ermittelte Warngröße (zusätzlich oder alternativ zur Bereitstellung zur Ausgabe an den Nutzer mittels einer Ausgabeeinrichtung) einer Steuereinrichtung bereitstell- und/oder übermittelbar.

Bevorzugt wird ein Warnsignal - zur Ausgabe an den Nutzer mittels einer Ausgabeeinrichtung und/oder einer Steuereinrichtung des Fahrzeugs (insbesondere im Falle eines autonomen Betrieb des Fahrzeugs) - in Abhängigkeit der Warngröße bereitgestellt.

Bevorzugt wird das Warnsignal an das Fahrzeug, und oder eine Ausgabeeinrichtung des Fahrzeugs und/oder an eine Steuereinrichtung des Fahrzeugs übermittelt.

Bevorzugt berücksichtigt die Steuereinrichtung des Fahrzeugs die Warngröße bei einer Steuerung wenigstens einer Fahrzeugfunktion des Fahrzeugs. Bei der Fahrzeugfunktion kann es sich beispielsweise um eine Fahrfunktion des Fahrzeugs, etwa eine Routenplanung und/oder eine Routenänderung und/oder ein (autonomer und/oder semi-autonomer) Betrieb des Fahrzeugs und/oder um eine Fahrzeugassistenzfunktion handeln.

Unter Fahrziel wird insbesondere ein beliebiger Ort entlang einer (beabsichtigten) Fahrroute oder in einem vorgegebenen räumlichen Abstand um eine (beabsichtigten) Fahrroute des Nutzers verstanden. Insbesondere (kann zwar) muss es sich bei dem Fahrziel nicht um ein, einem Navigationssystem für das Fahrzeug vorliegendes Navigationsziel oder einen hiervon abgeleiteten Ort handeln.

Dabei kann das Fahrziel (von dem Nutzer) an einer Eingabeeinrichtung des Fahrzeugs oder für das Fahrzeug eingegeben worden sein. Denkbar ist aber auch, dass das Fahrzeug ein Fahrziel und/oder eine Fahrroute, etwa aufgrund wenigstens eines auf Häufigkeit und/oder Regelmäßigkeit und/oder einer Uhrzeit und/oder einem Wochentag und/oder einer Anzahl von Insassen und/oder dem Nutzer und/oder wenigstens einer vorangegangene Fahrt und/oder mehrere vorangegangene Fahrten basierenden Kriteriums, (insbesondere als Vorschlag) vorgibt und/oder auswählt.

Beispielsweise kann etwa eine Rückfahrt der zuletzt vorgenommenen Fahrroute durch das Fahrzeug (vor-)ausgewählt werden. Denkbar ist, dass der Nutzer des Fahrzeugs das Fahrziel und/oder Routenziel (etwa durch Eingabe ändern kann) Bevorzugt kann das Fahrzeug bei einer (automatischen) Auswahl einer Fahrroute und/oder eines Fahrziels (wenigstens teilsweise) eine erste, nach Fahrtantritt zurückgelegte Wegstrecke berücksichtigen.

Das Verfahren kann oder einzelne Verfahrensschritte können zeitlich vor oder bei Fahrtantritt (wenigstens teilweise) durchgeführt werden. Denkbar ist aber auch, dass das Verfahren und insbesondere die Ermittlung der Umfelddaten und/oder der Warngröße initiiert und/oder ausgelöst wird, sofern das Fahrzeug ein (neues und/oder geändertes) Fahrziel und/oder Fahrroute erfasst. Das Erfassen eines Fahrziels und/oder einer Fahrroute kann dabei durch eine (sprachbasierte und/oder gestenbasierte und/oder physische und/oder manuelle) Eingabe eines Nutzers oder durch eine (automatische) Ermittlung durch das Fahrzeug erfolgen.

Unter einem Fahrziel wird insbesondere ein (jeder) Ort entlang einer (aktuell beabsichtigten) Fahrroute verstanden. Dabei kann es sich um ein Zwischenziel oder das Endziel einer (beabsichtigten) Fahrroute handeln. Es kann sich aber auch insbesondere um jeden Punkt entlang der (vorgenommenen und/oder vorzunehmenden) Fahrroute handeln.

Insbesondere bezieht sich der vorgegebene Zeitraum auf einen aktuellen Zeitpunkt (zu welchem das Verfahren durchgeführt wird) und/oder auf den Zeitpunkt des Fahrtantritts und/oder auf einen erwarteten Zeitpunkt, an welchem sich das Fahrzeug an einem vorgegebenen Ort und insbesondere an dem Fahrziel befindet.

Mit anderen Worten werden vorangegangene, d.h. insbesondere zu einem früheren Zeitpunkt (insbesondere in Bezug auf einen aktuellen Zeitpunkt und/oder beispielsweise einen geschätzten Zeitpunkt am Fahrziel) ermittelte, Umfelddaten bei einer Ermittlung einer Gefahrensituation entlang einer Fahrroute berücksichtigt, welche zwar bereits zu einem vorangegangenen (früheren) Zeitpunkt ermittelt und/oder erzeugt wurden, deren vorangegangener Zeitpunkt (ihrer Ermittlung und/oder Erzeugung) noch innerhalb eines vorgegebenen Zeitraums (im Vergleich zu einem Vergleichszeitpunkt) liegt.

Bevorzugt handelt es sich bei den Umfelddaten um Daten, welche während einer vorangegangenen, insbesondere vor einem Neustart des Fahrzeugs, und besonders bevorzugt bereits abgeschlossenen Fahrt eines Fahrzeugs oder des Fahrzeugs mittels der Sensoreinrichtung zur Erfassung eines Fahrzeugumfelds ermittelt und/oder erzeugt wurden. Bevorzugt wurden die Umfelddaten bereits vor Fahrtantritt ermittelt und/oder erzeugt und/oder auf der Speichereinrichtung abgelegt. Bevorzugt handelt es sich bei den Umfelddaten nicht um Daten, welche während der aktuellen Fahrt (insbesondere ohne Fahrtunterbrechung) mittels der Sensoreinrichtung zur Erfassung eines Fahrzeugumfelds des Fahrzeugs ermittelt und/oder erzeugt wurden.

Mit Hilfe des hier entwickelten Verfahrens kann der Nutzer explizit vor eingangs beschriebenen Situationen gewarnt werden.

Enthalten beispielsweise die Umfelddaten, welche beispielsweise bei einer ersten Fahrt aufgenommen wurden, Informationen darüber, dass eine (insbesondere temporäre, etwa vorübergehende) potentiell gefährliche Situation, wie etwa eine Pfütze auf der Fahrbahn, vorhanden ist, kann diese Information in der Speichereinrichtung abgelegt werden und dem Nutzer bereitgestellt werden, sobald sich der Nutzer insbesondere in nahem zeitlichen Zusammenhang bzw. innerhalb dem vorgegebenen Zeitraum wieder dem Ort nähert, zu welchem die potentiell gefährliche Situation identifiziert wurde.

Wenn der Nutzer, insbesondere nach einer Fahrt mit einem Fahrzeug in die eine Richtung, nun sein Fahrzeug in beispielsweise entgegengesetzte Richtung fährt (und der zeitliche Abstand zwischen letztmaligen Durchfahren und erneutem Durchfahren kleiner als eine frei applizierbare Zeit ist), wird der Kunde über die lokale potentiell gefährliche Situation, wie etwa eine Glätte, welche sich in der Zwischenzeit aus der Pfütze entwickelt hat, gewarnt.

Der vorgegebene Zeitraum, in Bezug auf welchen Umfelddaten berücksichtigt werden, ist dabei vorgebbar und kann insbesondere von dem Nutzer wählbar und/oder einstellbar sein. Dabei kann ein fester Zeitraum gewählt werden.

Insbesondere kann als vorgegebener Zeitraum ein Zeitraum zwischen einem Tag und einem Monat, bevorzugt ein Zeitraum zwischen einem Tag und zwei Wochen, bevorzugt ein Zeitraum zwischen einem Tag und einer Woche, bevorzugt ein Zeitraum zwischen einem Tag und 5 Tagen und besonders bevorzugt ein Zeitraum zwischen einem Tag und zwei Tagen liegen. Denkbar ist auch, dass als vorgegebener Zeitraum ein Zeitraum gewählt ist, welcher maximal 24 Stunden, bevorzugt maximal 20 Stunden, bevorzugt maximal 15 Stunden, bevorzugt maximal 10 Stunden, bevorzugt maximal 5 Stunden und besonders bevorzugt maximal 2 Stunden beträgt.

Bevorzugt hängt der vorgegebene Zeitraum von einer (maximalen) Speicherzeit einer Speichereinrichtung, etwa eines Ringspeichers ab.

Denkbar ist aber auch, dass der vorgegebene Zeitraum variabel ist und etwa der Zeitraum festlegbar und/oder änderbar ist, bevorzugt in Abhängigkeit der Umfelddaten. Bevorzugt ist der vorgegebene Zeitraum von den Umfelddaten, insbesondere einem Inhalt der Umfelddaten und/oder einer (interpretierten) Bedeutung der Umfelddaten, abhängig. Wird beispielsweise eine Pfütze detektiert, kann etwa ein längerer Zeitraum vorgegeben sein als bei einem, auf der Fahrbahn liegenden, leicht beweglichen Hindernis wie einem Fußball.

Bevorzugt gleicht das Fahrzeug, insbesondere eine Warneinrichtung des Fahrzeugs, das (aktuelle und/oder beabsichtigte) Fahrziel des Fahrzeugs mit Umfeldortsdaten, welche zusammen mit Umfelddaten auf der Speichereinrichtung abgelegt sind (und welche innerhalb des vorgegebenen Zeitraums ermittelt und/oder erzeugt wurden), ab. Bevorzugt ermittelt das Fahrzeug und insbesondere eine Warneinrichtung (des Fahrzeugs und/oder eines externen Servers, insbesondere eines Backend), ob Umfelddaten (welche insbesondere innerhalb des vorgegebenen Zeitraums ermittelt und/oder erzeugt wurden) entlang einer (aktuellen) Fahrroute des Fahrzeugs liegen.

Bevorzugt ermittelt die das Fahrzeug und insbesondere die Warneinrichtung (des Fahrzeugs und/oder des externen Servers), ob die Umfelddaten die von dem Fahrzeug gewählte und/oder zu benutzende Fahrbahn betreffen.

Zur Bestimmung der Umfeldortsdaten können etwa GPS-Empfänger, Sensoren zur Raddrehzahl-Bestimmung oder Beschleunigungssensoren (des bzw. eines Fahrzeugs) verwendet werden. Bevorzugt werden die Umfeldortsdaten mit dem Fahrziel des Fahrzeugs und/oder dem aktuellen Aufenthaltsort des Fahrzeugs abgeglichen.

Bevorzugt ermittelt eine Sensoreinrichtung zur Erfassung eines Fahrzeugumfelds des Fahrzeugs aktuelle Umfelddaten (zu einem aktuellen Zeitpunkt), insbesondere während der Fahrt des Fahrzeugs zum Fahrziel) durch Erfassung des Fahrzeugumfelds des Fahrzeugs.

Bevorzugt wird die Warngröße auf Grundlage eines Vergleichs der aktuellen Umfelddaten mit vorangegangenen, auf der Speichereinrichtung abgelegter Umfelddaten ermittelt. Durch einen derartigen Vergleich kann etwa festgestellt werden, ob eine vormals als (potentielle) Gefahrensituation eingestufte Situation unverändert als (potentielle) Gefahrensituation einzustufen ist und/oder ob sich eine Änderung dieser Einstufung ergeben hat.

Beispielsweise kann durch einen Vergleich mit vorangegangener Kamerabilder mit aktuellen Kamerabildern ermittelt werden, ob ein auf der Fahrbahn liegendes Hindernis (etwa ein verrutschter Gullideckel) immer noch als Hindernis auf der Fahrbahn platziert ist.

Weiterhin kann aus einem Vergleich aktueller Umfelddaten mit den vorangegangenen Umfelddaten eine (präzise) Lokalisierung und/oder Ort einer Gefahrensituation ermittelt werden. So kann etwa durch Auswertung von Umgebungsdaten (etwa Bäume oder Gebäude am Fahrzeugrand) eine exakte Lokalisierung einer (potentielle) Gefahrenstelle (welche eine Gefahrensituation ergeben kann) vorgenommen werden.

Bevorzugt ist die Sensoreinrichtung zur Erfassung eines Fahrzeugumfelds (eines Fahrzeugs) ausgewählt aus einer Gruppe von Sensoren, welche eine (Farb-)Kamera, eine Frontkamera, eine Rückkamera, einen Radar-Sensor, einen Ultraschallsensor, einen Lidar-Sensor, einen thermischen Sensor und dergleichen sowie Kombinationen hiervon umfasst.

Bevorzugt erzeugt die Sensoreinrichtung zur Erfassung eines Fahrzeugumfelds örtlich aufgelöste (insbesondere 2D- und/oder 3D-) Sensordaten (von einem Fahrzeugumfeld des jeweiligen Fahrzeugs).

Bevorzugt werden die Umfelddaten aus den Sensordaten, insbesondere unter Verwendung einer Prozessoreinrichtung und/oder Datenverarbeitungseinrichtung, mittels Anwendung wenigstens eines (computerimplementierten) Computer-Vision-Verfahrens erzeugt, in welchem (computer-implementierte) Wahrnehmungs- und/oder Erfassungsaufgaben ausgeführt werden, beispielsweise (computer-implementierte) 2D - und/oder 3D- Objekterkennungsverfahren und/oder (computer-implementierte) Verfahren zur semantischen Segmentierung und/oder (computer-implementierte) Objektklassifizierung ("Image classification") und/oder (computer-implementierte) Objektlokalisierung.

Dabei wird bei der Objektklassifizierung das in den Sensordaten erfasste und/oder dargestellte Objekt einer (vorher eingelernten und/oder vorgegebenen) Klasse zugeordnet. Bei einer Objektlokalisierung wird insbesondere zusätzlich zu einer Objektklassifizierung ein Ort eines in den Sensordaten erfassten und/oder dargestellten Objekts (insbesondere in Bezug auf die Sensordaten) bestimmt bzw. ermittelt, welcher insbesondere durch eine sogenannte Bounding Box markiert und/oder hervorgehoben wird. Bei der semantischen Segmentierung wird insbesondere jedem Pixel der Sensordaten eine Klasse (zur Klassifizierung eines Objekts) (insbesondere aus einer insbesondere vorgegebenen Vielzahl von Klassen) zugeordnet (Klassen-Annotation).

Bei den Klassen kann es sich beispielsweise (unter anderem) um eine (potentielle) Gefahrensituation auslösende und/oder zu einer (potentiellen) Gefahrensituation führende Objekte wie beispielsweise eine (Regen-)Pfütze, eine Ölspur, Personen (wie etwa spielende Kinder), Hindernisse (wie etwa ein Ast) und dergleichen handeln und/oder derartige Objekte umfassen.

Bevorzugt kann es sich bei den, eine (potentielle) Gefahrensituation auslösenden und/oder zu einer (potentiellen) Gefahrensituation führenden Objekte (insbesondere auch) um nicht mit der Fahrbahn (fest) verbundene und/oder verknüpfte, zu einer potentiellen Gefahrensituation führende Objekte (wie etwa Baustellen) handeln. Bevorzugt handelt es sich (insbesondere auch) um gegenüber der Fahrbahn (frei) bewegliche (insbesondere temporäre) Objekte, deren Ort sich gegenüber der Fahrbahn (etwa durch Wind und/oder Witterungseinflüsse etc.) insbesondere ohne (menschliche) Einwirkung ändern kann (wie etwa eine Regenpfütze, ein Fußball, ein Ast).

Bevorzugt kann es sich bei den eine (potentielle) Gefahrensituation auslösenden und/oder zu einer (potentiellen) Gefahrensituation führenden Objekten um Situationen und/oder Objekte handeln, welche durch die Witterung entstanden sind (wie etwa eine Regenpfütze) und/oder welche durch Einwirkung meteorologischer Einflüsse (wie etwa Wind und/oder Sturm und/oder Niederschlag) erst zu derartigen (potentielle) Gefahrensituation auslösenden und/oder zu einer (potentiellen) Gefahrensituation führenden Objekten wurden (wie etwa ein Ast und/oder ein auf die Fahrbahn gewehtes Objekt, wie ein Ast).

Bevorzugt handelt es sich bei den, eine (potentielle) Gefahrensituation auslösenden und/oder zu einer (potentiellen) Gefahrensituation führenden Objekten um nicht mit der Fahrbahn (fest) verbundene und/oder verknüpfte, zu einer potentiellen Gefahrensituation führende Objekte (wie etwa Baustellen).

Bevorzugt basiert die Ermittlung der Umfelddaten aus den von der Sensoreinrichtung erzeugten (Roh-)Daten oder hieraus abgeleiteten Daten (und insbesondere basiert die Ausführung von Computer-Vision-Verfahren bzw. Wahrnehmungsverfahren) auf (computer-implementierten) Verfahren des maschinellen Lernens, bevorzugt auf wenigstens einem (künstlichen) neuronalen Netzwerk basierenden Verfahren des maschinellen Lernens. Ein solches neuronales Netzwerk kann beispielsweise als tiefes neuronales Netzwerk (Deep Neural Network, DNN) und/oder ein sogenanntes Convolutional Neural Network (CNN) (dt. Faltungsnetzwerk) und/oder ein rekurrentes Neuronales Netzwerk (RNN, engl. Recurrent Neural Network) ausgestaltet sein.

Bevorzugt umfassen die Umfelddaten charakteristische Daten für ein aus den (Roh-)Sensordaten ermitteltes Objekt und/oder eine Klasse zur Klassifizierung des Objekts.

Bevorzugt nimmt eine Auswerteeinrichtung eine Bewertung vor, ob es sich bei dem ermittelten Objekt und/oder der ermittelten Klasse um eine (potentielle) Gefahrensituation handelt und/oder ob es sich (insbesondere innerhalb eines vorgegebenen Zeitraums) zu einer (potentiellen) Gefahrensituation, insbesondere unter Berücksichtigung meteorologischer Einflüsse, entwickeln kann.

Die Auswerteeinrichtung kann dabei im Fahrzeug oder außerhalb des Fahrzeugs bzw. extern angeordnet sein. Bevorzugt ist die insbesondere intelligente, Auswerteeinrichtung in der Lage, über Algorithmen (KI, d. h. Künstliche Intelligenz, machine learning (maschinelles Lernen), deep learning etc.) eine Beurteilung der vorliegenden Situation in Hinblick auf das Vorliegen oder Entstehen einer Gefahrensituation auf Grundlage der von der wenigstens einen Sensoreinrichtung aufgenommenen Werte vorzunehmen. Bevorzugt weist die Auswerteeinrichtung einen Prozessor und/oder eine Speichereinrichtung auf. Bevorzugt ist die Auswerteeinrichtung dazu geeignet und bestimmt, eine prädiktive Vorhersage in Hinblick auf eine potentielle Gefahrensituation vorzunehmen.

Die Auswerteeinrichtung kann (insbesondere mittels eines Computer-Programms und/oder mithilfe moderner Algorithmen wie KI, machine learning und/oder deep learning oder dergleichen) eine Klassifizierung in vorgegebene Stufen einer Gefahrensituation vornehmen

Bevorzugt umfassen die Umfelddaten wenigstens eine Information über die Beurteilung einer (potentiellen) Gefahrensituation und/oder eine Klassifizierung in eine vorgegebene Stufe einer Gefahrensituation.

Die Kamera erkennt beispielsweise über neuronale Netze, dass sich etwa eine Pfütze auf der Fahrbahn gebildet hat.

Da der Speicher im Fahrzeug limitiert ist, wird diese Information in einem Ringspeicher immer wieder neu überschrieben (z.B. nur die Information von 500m / 2km abspeichern).

Beim Abstellen des Fahrzeugs liegt somit das Wissen der letzten zurückgelegten Wege vor und es ist auch abgespeichert, an welchen Stellen, z.B. in Relation zu Straßenschildern, Spurmarkierungen, Bäumen etc. eine Pfütze erkannt wurde.

Ein analoges Verfahren gilt für Hindernisse, Verkehrsbehinderung, Baustellen etc.

Das System merkt sich (speichert) diese Information entlang der gefahrenen Route. Sollte das Ego-Fahrzeug zeitnah erneut diese Route fahren, so wird der Fahrer entsprechend der Temperatur und entsprechend der Verkehrssituation gewarnt ("erinnert").

Bevorzugt werden die Umfelddaten in einer (temporären und/oder lokalen) Speichereinrichtung des Fahrzeugs abgelegt. Bei der Speichereinrichtung kann es sich dabei um einen Ringspeicher handeln. Bevorzugt werden lediglich die Umfelddaten einer vorgegebenen, vorangegangenen Fahrroute einer vorgegebenen Fahrlänge und/oder Fahrdauer zum Abruf (bevorzugt in der internen Speichereinrichtung des Fahrzeugs) bereitgehalten. Besonders bevorzugt werden die Umfelddaten nach Überschreiten der vorgegebenen Fahrlänge und/oder Fahrdauer überschrieben und/oder gelöscht.

Bei der Sensoreinrichtung zur Erfassung eines Fahrzeugumfelds kann es sich um eine Sensoreinrichtung eines Fahrzeugs handeln. Bevorzugt kann es sich bei dieser Sensoreinrichtung um eine Sensoreinrichtung desselben Fahrzeugs handeln, dessen Nutzer vor der potentiellen Gefahrensituation an dem wenigstens einen Fahrziel des Fahrzeugs gewarnt werden soll.

Bevorzugt werden die Sensordaten und/oder die Umfelddaten während einer Fahrt des Fahrzeugs erzeugt und/oder ermittelt.

Bei einem weiter bevorzugten Verfahren handelt es sich bei der Sensoreinrichtung zur Erfassung eines Fahrzeugumfelds, mittels welcher die vorangegangenen Umfelddaten ermittelt wurden, um eine Sensoreinrichtung eines zu dem Fahrzeug verschiedenen Fahrzeugs.

Mit anderen Worten kann es sich bei der Sensoreinrichtung zur Erfassung eines Fahrzeugumfelds um eine Sensoreinrichtung eines von dem Fahrzeug, dessen Nutzer vor der potentiellen Gefahrensituation an dem wenigstens einen Fahrziel des Fahrzeugs gewarnt werden soll, verschiedenen Fahrzeug oder Objekt handeln.

Dabei kann das verschiedene Fahrzeug oder Objekt mit dem Fahrzeug, dessen Nutzer vor der potentiellen Gefahrensituation an dem wenigstens einen Fahrziel des Fahrzeugs gewarnt werden soll, wenigstens mittelbar und bevorzugt unmittelbar in einer Kommunikationsverbindung stehen (z.B. über Car2Car-Kommunikation, C2C-Kommunikation und/oder Car2x-Kommunikation und/oder Car2I-Kommunikation). Dabei kann die Sensoreinrichtung zur Erfassung eines Fahrzeugumfelds des verschiedenen Fahrzeugs oder Objekts die ermittelten Umfelddaten wenigstens mittelbar (über andere Verkehrsteilnehmer oder Infrastruktur) und bevorzugt unmittelbar an das Fahrzeug (Nutzer vor der potentiellen Gefahrensituation an dem wenigstens einen Fahrziel des Fahrzeugs gewarnt werden soll) übermitteln und/oder übertragen.

Bevorzugt erhält das Fahrzeug über Car2Car/Car2X die Information, dass beispielsweise Pfützen erkannt wurden.

Diese Information kann entweder nur lokal im Auto gespeichert werden und kann aber auch optional in einer Cloud hochgeladen werden.

Über eine zusätzliche Car2X-lnfo kann beispielsweise die lokale Glättewarnung auch anderen Fahrzeugen zur Verfügung gestellt werden.

Bevorzugt übermittelt das Fahrzeug und/oder das Objekt, welches die Sensoreinrichtung zur Erfassung eines Fahrzeugumfelds umfasst (mittels welcher die Umfelddaten ermittelt wurden), die Umfelddaten oder hierfür charakteristische Daten an die Speichereinrichtung bereitgestellt und/oder stellt die Umfelddaten oder hierfür charakteristische Daten der Speichereinrichtung bereit. Bei der Speichereinrichtung kann es sich um die Speichereinrichtung des Fahrzeugs handeln, beispielsweise einen Ringspeicher.

Bei einem bevorzugten Verfahren handelt es sich bei der Speichereinrichtung um eine externe Speichereinrichtung, insbesondere eine Cloud-basierte und/oder einen externen Server. Unter einem externen Server ist insbesondere ein in Bezug auf das Fahrzeug externer Server, insbesondere ein Backend-Server, zu verstehen. Der externe Server ist beispielsweise ein Backend eines Fahrzeugherstellers oder eines Dienstanbieters, welcher dazu eingerichtet ist, Umfelddaten in Bezug auf potentielle Gefahrensituationen in Bezug auf eine Vielzahl von Fahrzeugen zu verwalten. Die Funktionen des Backend bzw. des externen Servers können dabei auf (externen) Serverfarmen durchgeführt werden. Beim (externen) Server kann es sich um ein verteiltes System handeln. Der externe Server und/oder das Backend kann Cloudbasiert sein.

Damit können vorteilhaft die Gefahrensituationen via Cloud bzw. via zentralseitigem Server ausgetauscht werden. Dies bietet den Vorteil, dass ein individuelles Fahrzeug nicht selbst an der Gefahrenstelle, etwa der Pfütze, vorbeigefahren sein muss, um nach einem Temperatursturz dort eine Glättesituation zu orten.

Bevorzugt werden zur Ermittlung der Warngröße lediglich vorangegangene Umfelddaten berücksichtigt, welche innerhalb des vorgegebenen Zeitraums ermittelt und/oder erzeugt wurden.

Bevorzugt empfängt eine Warneinrichtung des Fahrzeugs (bevorzugt über eine drahtlose Kommunikationsverbindung) die von der Speichereinrichtung abgerufenen Umfelddaten und ermittelt insbesondere die Warngröße in Abhängigkeit der Umfelddaten.

Denkbar ist aber auch, dass eine Warneinrichtung eines externen Servers, welcher die Speichereinrichtung umfasst, basierend auf den von der Speichereinrichtung abgerufenen Umfelddaten die Warngröße ermittelt.

Bei einem weiter bevorzugten Verfahren umfassen die vorangegangenen Umfelddaten wenigstens ein erfasstes und insbesondere als solches eingestuftes Warnmerkmal einer potentiellen Gefahrensituation. Bevorzugt sind die Umfelddaten in Bezug auf die (Roh-)Sensordaten im Wesentlichen reduziert auf Daten, welche für das wenigstens eine Warnmerkmal einer potentiellen Gefahrensituation oder die Warnmerkmale der potentiellen Gefahrensituation reduziert sind. Dies bietet den Vorteil, dass nur kleinere Datenmengen abgelegt werden müssen. Bevorzugt wird das Warnmerkmal abgeleitet in Abhängigkeit einer (obig beschriebenen), wenigstens einem Teil der Sensordaten zugewiesenen Klasse zur Klassifizierung (eines Objekts).

Bei einem weiter bevorzugten Verfahren werden meteorologische Daten in Bezug auf das Fahrzeug und/oder das Fahrziel des Fahrzeugs ermittelt und die Warngröße in Abhängigkeit der meteorologischen Daten ermittelt. Dies bietet den Vorteil, dass basierend auf den meteorologischen Daten eine Auswertung der Umfelddaten hinsichtlich einer prädiktiven Vorhersage eines aktuellen Zustands einer potentiellen Gefahrensituation an dem Umfeldort, an welchem die Umfelddaten erfasst wurden, vorgenommen werden kann.

Unter meteorologischen Daten können insbesondere Daten verstanden werden, welche ausgewählt sind aus einer Gruppe, die eine Windrichtung, eine Windstärke, eine (Umgebungs-temperatur (des Fahrzeugs), eine Luftfeuchtigkeit, einen Luftdruck, eine Stabilität, eine Wolkenbedeckung, einen Niederschlag und dergleichen sowie Kombinationen hiervon umfasst.

Die Ermittlung der meteorologischen Daten kann dabei bevorzugt mit einer Sensoreinrichtung des Fahrzeugs selbst erfasst werden. Denkbar ist aber auch, dass (insbesondere das Fahrzeug) die meteorologischen Daten (wenigstens teilweise), insbesondere über eine drahtlose Kommunikationsverbindung, von einem externen Server und/oder über einen Online-Dienst (etwa einen Wetterdienst) abfragt.

Bei einem weiter bevorzugten Verfahren werden als potentielle Gefahrensituation solche identifiziert, welche sich mit einer vorgegebenen Wahrscheinlichkeit bei wenigstens einem vorgegebenen Witterungsverlauf zu einer Gefahrensituation entwickeln. Dies bietet den Vorteil, dass der Nutzer auch vor Situationen, welche bei dem vorangegangenen (Ermittlungs-)Zeitpunkt noch keine Gefahrensituation darstellten, welche sich aber bei Eintreten bestimmter Witterungsbedingungen zu Gefahrensituationen entwickeln können (wie etwa im Falle eines Temperatursturzes), gewarnt werden kann.

Bevorzugt werden die vorangegangenen Umfelddaten und/oder das erfasste Warnmerkmal im Wesentlichen auf Grundlage einer sich entsprechend eines sich aus einem meteorologischen Verlauf ergebenden Entwicklung (etwa unter Anwendung physikalischer Modelle) ausgewertet und überprüft, ob sich hieraus eine Gefahrensituation für den Nutzer und/oder das Fahrzeug ergeben kann.

Bei einem weiter bevorzugten Verfahren sind auf der Speichereinrichtung den Umfelddaten zugeordnete meteorologische Daten, insbesondere (Außen-)Temperaturdaten, abgelegt. Bevorzugt werden im Wesentlichen zeitgleich mit der Erfassung und/oder Ermittlung der Umfelddaten, insbesondere an dem Umfeldort (an welchem die Umfelddaten erfasst werden) meteorologische Daten erfasst und/oder ermittelt.

Zusätzlich wird bevorzugt mit den Umfelddaten auch eine Information über die Außentemperatur abgelegt.

Wenn diese Temperatur z.B. schon unter einer gewissen Schwelle liegt, haben die (Umfeld-)Daten bevorzugt eine besondere Güte bzw. Brisanz.

Beim erneuten Motorstart wird die aktuelle Umgebungstemperatur (auch optional zusätzlich der Temperatur-Verlauf über z.B. die Nacht (Cloud-Info, oder aus dem Fahrzeug aufgezeichnet) in das neuartige Verfahren eingelesen.

Wenn die Temperatur/Temperaturen unter eine gewisse Schwelle gefallen sind, besteht die hohe Wahrscheinlichkeit, dass die gestern erkannten Pfützen jetzt über z. B die Nacht gefroren sind.

Wenn der Nutzer/Kunde nun sein Fahrzeug in beispielsweise entgegengesetzte Richtung fährt (und der zeitliche Abstand zwischen letztmaligen Durchfahren und erneutem Durchfahren kleiner als eine frei applizierbare Zeit ist), wird der Kunde über die lokale Glätte gewarnt.

Bevorzugt wird bei der Ermittlung der Warngröße ein zeitlicher Verlauf der (ermittelten und/oder abgerufenen) meteorologischer Daten berücksichtigt. Dies erlaubt eine präzisere Vorhersage, ob die vorangegangenen Umfelddaten auf eine (aktuelle) Gefahrensituation schließen lassen.

Analog kann bei steigender Temperatur eine zurückliegende Frost-/Glättewarnung (d.h. das Auto ist zuvor über Glatteis gefahren und die Glatteis-Position wurde gespeichert) entschärft werden, da bei steigender Temperatur die Forst-/Glättewarnung zu einer Nässe- oder Aquaplaning-Warnung degradiert.

Bevorzugt handelt es sich bei dem Warnsignal um ein optisches und/oder akustisches und/oder haptisches Warnsignal.

Bei einem weiter bevorzugten Verfahren wird das Warnsignal mittels eines (insbesondere Augmented-Reality-) Head-up-Displays (HUD) als Ausgabeeinrichtung und/oder als virtueller Bildbestandteil angezeigt.

Bevorzugt wird mittels der Ausgabeeinrichtung, insbesondere mittels des (Augmented-Reality-) Head-up-Displays ein virtueller Bildbestandteil ausgegeben, welcher für die Warnmeldung, insbesondere eine Art der Gefahrensituation, charakteristisch ist.

So könnte etwa mittels AR-HUD dem Nutzer die Gefahrensituation dargestellt und/oder visualisiert werden. Beispielsweise könnte ein kontaktanaloges Symbol für die Warnstelle, beispielsweise eine Eisflocke auf der Straße, angezeigt werden.

Bevorzugt wird der virtuelle Bildbestandteil und/oder das kontaktanaloge Symbol auf eine Fahrzeuginnenfläche, bevorzugt auf eine Fahrzeugscheibe und besonders bevorzugt auf eine Windschutzscheibe projiziert, erscheint jedoch bevorzugt für den Nutzer als in einer bestimmten Entfernung vor dem Fahrzeug dargestellt zu sein. Bevorzugt basiert eine derartige Darstellung und/oder Projektion auf der (insbesondere von einer Blickrichtungserfassungseinrichtung des Fahrzeugs ermittelten) Blickrichtung und/oder Augenposition des Nutzers.

Bevorzugt kann der Nutzer in unterschiedlichen Warnstufen unterschiedlich gewarnt werden: Der Nutzer kann beispielsweise (gemäß einer ersten Warnstufe) nur optisch (insbesondere über eine Pop-Up-Mitteilung) gewarnt werden. Der Nutzer kann (gemäß einer weiteren Warnstufe) akustisch und/oder haptisch gewarnt werden. Dem Nutzer können (gemäß einer dritten Warnstufe) (zusätzlich oder alternativ) beispielsweise mittels eines AR-HUD die erkannten Stellen, beispielsweise rot, markiert werden.

Bevorzugt kann eine (vorgegebene) Vielzahl verschiedener Warnstufe vorgesehen sein. Bevorzugt wird den Umfelddaten eine Warnstufe dieser Vielzahl verschiedener Warnstufen zugeordnet. Bevorzugt ist jeder Warnstufe eine Ausgabemodalität (fest und/oder veränderbar und/oder nutzerspezifisch einstellbar) zugeordnet. Bevorzugt unterscheiden sich die den Warnstufen zugeordneten Ausgabemodalitäten, insbesondere paarweise, voneinander.

Die Warnstufen können in dem Verfahren in z. B einem Kennfeld abgelegt werden -je kälter es ist, je höher die Detektionswahrscheinlichkeit der Kamera ist (z.B. auch auf dem erneuten Durchfahren spiegelnder Pfütze erkannt), desto höher kann die Warnstufe ausgegeben werden.

In einer weiteren Ausprägung kann der Nutzer die Warnstufen auch insbesondere manuell, beispielsweise im Kombiinstrument, einstellen oder ganz deaktivieren.

Die vorliegende Erfindung ist weiterhin gerichtet auf Verfahren und/oder System zum Betrieb eines Fahrzeugs bei einer an wenigstens einem Fahrziel des Fahrzeugs, insbesondere potentiell auftretenden und/oder erwarteten, Gefahrensituation, umfassend ein Abrufen von Fahrzeugdaten auf Grundlage des Fahrziels. Weiterhin umfasst das Verfahren eine Ermittlung von meteorologischen Daten in Bezug auf das Fahrzeug und/oder das Fahrziel des Fahrzeugs.

Weiterhin umfasst das Verfahren die Ermittlung einer Steuergröße auf Grundlage der Fahrzeugdaten und der ermittelten meteorologischer Daten. Weiterhin wird wenigstens ein Steuersignal zur Ausgabe an den Nutzer mittels einer Ausgabeeinrichtung in Abhängigkeit der Steuergröße, insbesondere zur Steuerung einer Fahrzeugfunktion, bereitgestellt.

Das Verfahren kann einzelne oder mehrere im Kontext des obigen Verfahren beschriebene Verfahrensschritte einzeln oder in Kombination miteinander aufweisen und umgekehrt.

Bevorzugt handelt es sich bei dem Steuersignal um ein Steuersignal zur Steuerung eines Navigationssystems des Fahrzeugs. Bevorzugt handelt es sich bei den meteorologischen Daten um eine Temperatur.

Bevorzugt handelt es sich bei dem Steuersignal um ein Steuersignal zur Steuerung des Beschleunigungs- und/oder Bremsverhaltens des Fahrzeugs.

Bevorzugt berücksichtigt das Verfahren und/oder das System bei der Routenplanung die Temperatur am Zielort.

Bevorzugt berücksichtigt das Verfahren und/oder das System im Fall von Hybrid- oder Elektrofahrzeugen in der Fahr- und Betriebsstrategie durch gezielte Rekuperation und Lastpunktverschiebung das Ladeverhalten des Fahrzeugs derart, dass genügen elektrische Energie bei Ankunft im Batteriespeicher vorhanden ist, um mindestens einen vorgegebenen Zeitraum, bevorzugt (wenigstens) eine Nacht (oder 24h), am Zielort bei der erfassten Temperatur stehen zu können und um genügend Batteriekapazität für einen Start bei den (ggf. sehr niedrigen Temperaturen) zu reservieren.

Mit abnehmender Temperatur am Zielort muss entsprechend mehr elektrische Leistung aufgewendet werden. Die Betriebsstrategie muss sicherstellen bzw. während der Fahrt zusätzliche Rekuperationsphase(n), zusätzliche Lastpunktverschiebung und/oder bei Elektrofahrzeugen sogar zusätzliche Zwischenstopps bei einer Ladesäule einplanen, um am Zielort mit niedrigeren Temperaturen eine ausreichende Park- und Startreserve aufzuweisen.

Bevorzugt handelt es sich bei der Fahrzeugfunktion um eine Funktion einer Fahrzeugkomponente des Fahrzeugs handeln. Bevorzugt ist die Fahrzeugkomponente ausgewählt aus einer Gruppe, welche ein Navigationssystem, ein Fahrzeugsicherheitssystem (beispielsweise ein Bremssystem), ein System zum Führen des Fahrzeugs ein Verriegelungssystem einer Fahrzeugtür und/oder eines Fahrzeugfensters, einen Scheibenwischermechanismus, ein Fahrzeugschließsystem, ein Dachentfernungsmechanismus, ein Schiebedachmechanismus, ein Infotainmentsystem, ein Unterhaltungssystem und/oder ein Komfortsystem zur Steigerung des Fahrkomforts eines Insassen und Kombinationen hiervon umfasst.

Die vorliegende Erfindung ist weiterhin gerichtet auf eine Warneinrichtung (für ein Fahrzeug) zur Warnung eines (Fahrzeug-)Nutzers, insbesondere eines Fahrers, vor einer, insbesondere potentiellen und/oder erwarteten, Gefahrensituation an wenigstens einem Fahrziel des Fahrzeugs, wobei die Warneinrichtung, dazu geeignet und bestimmt ist, vorangegangene Umfelddaten auf Grundlage des Fahrziels und bevorzugt auf Grundlage eines vorgegebenen Zeitraums von einer Speichereinrichtung abzurufen, auf welcher die vorangegangenen Umfelddaten mit ihnen zugeordneten Umfeldortsdaten abgelegt sind, wobei es sich bei den vorangegangenen Umfelddaten um zu einem vorangegangenen Zeitpunkt mittels wenigstens einer Sensoreinrichtung zur Erfassung eines Fahrzeugumfelds ermittelte Daten handelt und wobei die Umfeldortsdaten für einen Ort des erfassten Fahrzeugumfelds charakteristisch sind.

Bevorzugt ist auch der vorangegangene Zeitpunkt, an welchem die Umfelddaten ermittelt und/oder erzeugt wurden, auf der Speichereinrichtung abgelegt. Insbesondere handelt es sich um ein Verfahren zur Fahrerwarnung mit Hilfe optischer Verfahren bei gefährlichen Situationen.

Erfindungsgemäß ist die Warneinrichtung dazu geeignet und bestimmt ist, auf Grundlage der Umfelddaten eine Warngröße zu ermitteln, in Abhängigkeit welcher ein Warnsignal zur Ausgabe an den Nutzer mittels einer Ausgabeeinrichtung bereitstellbar ist.

Bevorzugt ist die ermittelte Warngröße (zusätzlich oder alternativ zur Bereitstellung zur Ausgabe an den Nutzer mittels einer Ausgabeeinrichtung) einer Steuereinrichtung bereitstell- und/oder übermittelbar.

Bevorzugt ist die Warneinrichtung dazu geeignet und bestimmt, das Warnsignal - zur Ausgabe an den Nutzer mittels einer Ausgabeeinrichtung und/oder einer Steuereinrichtung des Fahrzeugs - in Abhängigkeit der Warngröße bereitzustellen. Bevorzugt wird das Warnsignal an eine Steuereinrichtung übermittelt, welche besonders bevorzugt das Warnsignal bei Vornahme wenigstens einer (automatischen) Steuerung einer Fahrzeugfunktion und insbesondere einer Fahrfunktion berücksichtigt.

Es wird also auch im Rahmen der erfindungsgemäßen vorgeschlagen, dass aus vorangegangenen Umfelddaten eine Warngröße abgeleitet werden kann.

Bevorzugt ist die Warneinrichtung dazu eingerichtet, geeignet und/oder bestimmt, das obig beschriebene Verfahren zur Warnung eines Nutzers eines Fahrzeugs sowie alle bereits obig im Zusammenhang mit diesem Verfahren beschriebene Verfahrensschritte einzeln oder in Kombination miteinander auszuführen. Umgekehrt kann das Verfahren zur Warnung eines Nutzers eines Fahrzeugs mit allen im Rahmen der Warneinrichtung beschriebenen Merkmalen einzeln oder in Kombination miteinander ausgestattet sein.

Bei der Warneinrichtung (für ein Fahrzeug) kann es sich um ein Element und/oder einen (festen) Bauteil des Fahrzeugs handeln.

Bei der Warneinrichtung (für ein Fahrzeug) kann es sich (alternativ oder zusätzlich) um ein Element und/oder eine Einrichtung eines (bevorzugt obig beschriebenen) externen Servers, insbesondere eines Backend (eines OEMs), handeln. Bevorzugt weist der externe Server die Speichereinrichtung auf, auf welcher die vorangegangenen Umfelddaten abgelegt sind.

Bevorzugt ist die Warneinrichtung dazu geeignet und bestimmt, meteorologische Daten in Bezug auf das Fahrzeug und/oder das Fahrziel des Fahrzeugs zu ermitteln, eine auf Grundlage der Umfelddaten und der ermittelten meteorologischer Daten die Warngröße zu ermitteln.

Bevorzugt weist die Warneinrichtung und/oder das Fahrzeug eine Ausgabeeinrichtung auf, welche ausgewählt ist aus einer Gruppe, die optische und/oder akustische und/oder haptische Ausgabeeinrichtungen und/oder ein (Augmented-Reality)-HeadUpDisplay umfasst.

Dabei kann es sich bei der Ausgabeeinrichtung um eine Ausgabeeinrichtung des Fahrzeugs handeln, welche insbesondere (fester) Bestandteil des Fahrzeugs ist. Daneben kann es sich bei der Ausgabeeinrichtung auch um eine (mobiles) Endgerät des Nutzers handeln, welches insbesondere (frei) beweglich gegenüber dem Fahrzeug ist.

Die vorliegende Erfindung ist weiterhin gerichtet auf ein Warnsystem umfassend wenigstens eine obig beschriebene Warneinrichtung für ein Fahrzeug entsprechend einer Ausführungsform sowie umfassend einen externen Server zur Verwaltung einer zentralen Datenbank mit Umfelddaten und/oder diesen zugehörigen Umfeldortsdaten und/oder diesen zugehörigen meteorologischen Daten (wie obig beschrieben). Bevorzugt ist das Warnsystem derart konfiguriert, dass eine Vielzahl von Warneinrichtungen verschiedener Fahrzeuge Umfelddaten und/oder Umfeldortsdaten und/oder meteorologische Daten an den externen Server übermitteln und/oder von diesem (insbesondere auf Grundlage eines Abgleichs mit einem Ort des Fahrzeugs) abrufen können.

Die vorliegende Erfindung ist weiterhin gerichtet auf ein Fahrzeug, insbesondere Kraftfahrzeug, umfassend eine obig beschriebene Warneinrichtung für ein Fahrzeug entsprechend einer Ausführungsform. Bevorzugt handelt es sich bei der Warneinrichtung um einen (festen, insbesondere einen nicht zerstörungsfrei lösbaren) Bestandteil des Fahrzeugs.

Bei dem Fahrzeug kann es sich insbesondere um ein (motorisiertes) Straßenfahrzeug handeln. Bei einem Fahrzeug kann es sich um ein Kraftfahrzeug handeln, welches insbesondere ein von dem Fahrer selbst gesteuertes Kraftfahrzeug ("Driver only"), ein halbautonomes, autonomes (beispielsweise der Autonomiestufe Level 3 oder 4 oder 5 (der Norm SAE J3016)) oder selbstfahrendes Kraftfahrzeug ist. Die Autonomiestufe Level 5 bezeichnet dabei vollautomatisch fahrende Fahrzeuge. Ebenso kann es sich bei dem Fahrzeug um ein fahrerloses Transportsystem handeln. Das Fahrzeug kann dabei von einem Fahrer gesteuert werden oder autonom fahren. Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Die vorliegende Erfindung ist weiterhin gerichtet auf einen externen Server, insbesondere ein (bevorzugt obig beschriebenes) Backend, umfassend eine obig beschriebene Warneinrichtung für ein Fahrzeug entsprechend einer Ausführungsform. Dabei ist die Warneinrichtung und/oder der externe Server dazu geeignet und bestimmt, wenigstens ein Fahrziel des Fahrzeugs zu erfassen.

Die vorliegende Erfindung ist weiterhin gerichtet auf ein Computerprogramm oder Computerprogrammprodukt, umfassend Programmmittel, insbesondere einen Programmcode, welcher zumindest einzelne oder mehrere Verfahrensschritte des erfindungsgemäßen Verfahrens einzeln oder in Kombination miteinander und bevorzugt eine der beschriebenen bevorzugten Ausführungsformen repräsentiert oder kodiert und zum Ausführen durch eine Prozessoreinrichtung ausgebildet ist.

Die vorliegende Erfindung ist weiterhin gerichtet auf einen Datenspeicher, auf welchem zumindest eine Ausführungsform des erfindungsgemäßen Computerprogramms oder einer bevorzugten Ausführungsform des Computerprogramms gespeichert ist.

Weitere Vorteile und Ausführungsformen ergeben sich aus der beigefügten Zeichnung:
Darin zeigt:

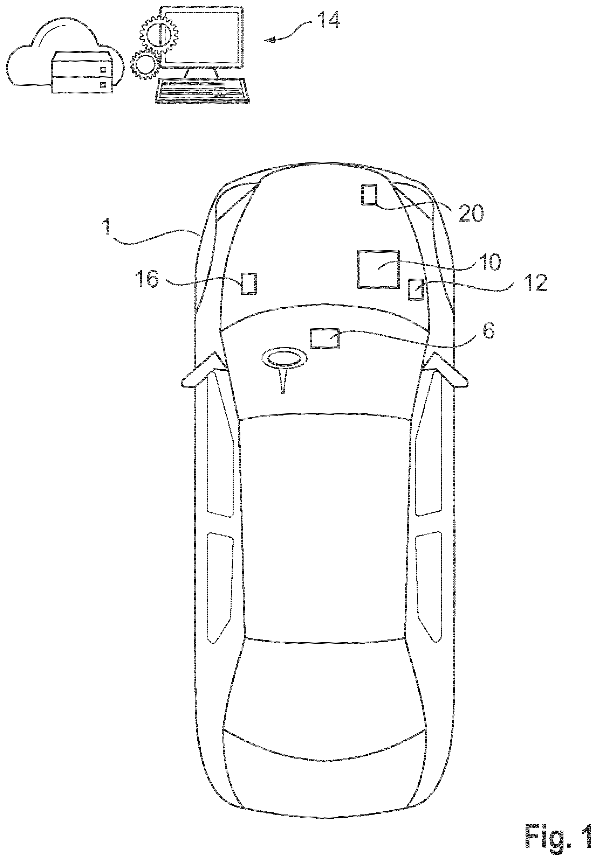

Fig. 1 eine schematische Darstellung eines Fahrzeugs mit erfindungsgemäßer Warneinrichtung.

Fig. 1 zeigt eine schematische Darstellung eines Fahrzeugs 1 mit erfindungsgemäßer Warneinrichtung 10. Das Bezugszeichen 20 kennzeichnet dabei eine Sensoreinrichtung zur Erfassung eines Fahrzeugumfelds, beispielsweise eine Frontkamera des Fahrzeugs.

Mittels dieser Sensoreinrichtung 20 zur Erfassung eines Fahrzeugumfelds wird beispielsweise während eines Heimwegs mit dem Fahrzeug 1 eine Pfütze auf der Fahrbahn (beispielsweise mittels eines Objekterfassungsverfahrens) erfasst.

Diese Pfütze kann insbesondere von einer Auswerteeinrichtung als potentielle Gefahrensituation bewertet werden und entsprechende Warnmerkmale als Umfelddaten auf einer internen Speichereinrichtung 12 und/oder auf einer externen Speichereinrichtung 14, bei welcher es sich etwa um eine Cloud oder ein Backend eines OEMs handeln kann, zusammen mit Umfeldortsdaten, d.h. Daten, welche für den Erfassungsort und/oder Ermittlungsort der Umfelddaten charakteristisch sind, abgelegt werden.

In Folge eines Temperatursturzes bis zum nächsten Morgen kann sich aus der Wasserpfütze beispielsweise eine Eisplatte entwickelt haben.

Bewegt ein Nutzer das Fahrzeug 1 am nächsten Morgen beispielweise in die Nähe der vormaligen Wasserpfütze vom vorherigen Tag, kann eine Warneinrichtung 10 des Fahrzeugs beispielsweise auf Grundlage einer erfassten und/oder ermittelten (Außen-)Temperatur des Fahrzeugs und auf Grundlage der von der internen Speichereinrichtung 12 und/oder der externen Speichereinrichtung abgerufenen Umfelddaten eine Warngröße ermitteln, mittels welcher vor der Gefahr der Eisplatte gewarnt werden kann.

Ebenso oder zusätzlich denkbar ist, dass die Warneinrichtung Teil des Backends ist und die ermittelte Warngröße an das Fahrzeug 1 (insbesondere über eine drahtlose Kommunikationsverbindung) übermittelt wird.

In Abhängigkeit dieser Warngröße kann über die Ausgabeeinrichtung 6 ein Warnsignal an den Nutzer ausgegeben werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Fahrzeug
- 10: Warneinrichtung
- 12: interne Speichereinrichtung
- 14: externe Speichereinrichtung, Cloud
- 16: Steuereinrichtung
- 20: Sensoreinrichtung zur Erfassung eines Fahrzeugumfelds, Frontkamera
- 6: Ausgabeeinrichtung

## Patentansprüche

1. Verfahren zur Warnung eines Nutzers eines Fahrzeugs (1) vor einer potentiellen Gefahrensituation an wenigstens einem Fahrziel des Fahrzeugs (1), umfassend:
- Abrufen vorangegangener Umfelddaten auf Grundlage des Fahrziels und eines vorgegebenen Zeitraums von einer Speichereinrichtung (12, 14), auf welcher die vorangegangenen Umfelddaten mit ihnen zugeordneten Umfeldortsdaten abgelegt sind, wobei es sich bei den vorangegangenen Umfelddaten um zu einem vorangegangenen Zeitpunkt mittels wenigstens einer Sensoreinrichtung (20) zur Erfassung eines Fahrzeugumfelds ermittelte Daten handelt und wobei die Umfeldortsdaten für einen Ort des erfassten Fahrzeugumfelds charakteristisch sind;
- Ermittlung einer Warngröße auf Grundlage der Umfelddaten, in Abhängigkeit welcher ein Warnsignal zur Ausgabe an den Nutzer mittels einer Ausgabeeinrichtung (6) bereitstellbar ist.

2. Verfahren nach Anspruch 1, **dadurch gekennzeichnet, dass** es sich bei der Speichereinrichtung um eine externe Speichereinrichtung, insbesondere eine Cloud-basierte und/oder eine zentrale Speichereinrichtung, handelt.

3. Verfahren nach einem der vorangegangenen Ansprüche, **dadurch gekennzeichnet, dass** es sich bei der Sensoreinrichtung (20) zur Erfassung eines Fahrzeugumfelds, mittels welcher die vorangegangenen Umfelddaten ermittelt wurden, um eine Sensoreinrichtung (20) eines zu dem Fahrzeug (1) verschiedenen Fahrzeugs (1) handelt.

4. Verfahren nach einem der vorangegangenen Ansprüche, **dadurch gekennzeichnet, dass** die vorangegangenen Umfelddaten wenigstens ein erfasstes Warnmerkmal einer potentiellen Gefahrensituation umfassen.

5. Verfahren nach einem der vorangegangenen Ansprüche, **dadurch gekennzeichnet, dass** meteorologische Daten in Bezug auf das Fahrzeug (1) und/oder das Fahrziel des Fahrzeugs (1) ermittelt werden und die Warngröße in Abhängigkeit der meteorologischen Daten ermittelt wird.

6. Verfahren nach dem vorangegangen Anspruch, **dadurch gekennzeichnet, dass** als potentielle Gefahrensituation solche identifiziert werden, welche sich mit einer vorgegebenen Wahrscheinlichkeit bei wenigstens einem vorgegebenen Witterungsverlauf zu einer Gefahrensituation entwickeln.

7. Verfahren nach einem der vorangegangenen Ansprüche, **dadurch gekennzeichnet, dass** auf der Speichereinrichtung den Umfelddaten zugeordnete meteorologische Daten, insbesondere Temperaturdaten, abgelegt sind.

8. Verfahren nach einem der vorangegangenen Ansprüche, **dadurch gekennzeichnet, dass** das Warnsignal mittels eines Head-up-Displays und/oder als virtueller Bildbestandteil, angezeigt wird.

9. Warneinrichtung (10) zur Warnung eines Nutzers eines Fahrzeugs (1) vor einer potentiellen Gefahrensituation an wenigstens einem Fahrziel des Fahrzeugs (1), wobei die Warneinrichtung, dazu geeignet und bestimmt ist, vorangegangene Umfelddaten auf Grundlage des Fahrziels und eines vorgegebenen Zeitraums von einer Speichereinrichtung (12, 14) abzurufen, auf welcher die vorangegangenen Umfelddaten mit ihnen zugeordneten Umfeldortsdaten abgelegt sind, wobei es sich bei den vorangegangenen Umfelddaten um zu einem vorangegangenen Zeitpunkt mittels wenigstens einer Sensoreinrichtung (20) zur Erfassung eines Fahrzeugumfelds ermittelte Daten handelt und wobei die Umfeldortsdaten für einen Ort des erfassten Fahrzeugumfelds charakteristisch sind, **dadurch gekennzeichnet, dass** die Warneinrichtung (10) dazu geeignet und bestimmt ist, auf Grundlage der Umfelddaten eine Warngröße zu ermitteln, in Abhängigkeit welcher ein Warnsignal zur Ausgabe an den Nutzer mittels einer Ausgabeeinrichtung (6) bereitstellbar ist.

10. Fahrzeug (1), insbesondere Kraftfahrzeug, umfassend eine Warneinrichtung gemäß dem vorhergehenden Anspruch.
